# EUROPEAN PATENT APPLICATION

(11) **EP 3 369 336 A1**
(43) Date of publication of application: **05.09.2018**
(21) Application number: 18159238.7
(22) Date of filing: 28.02.2018
(51) Int. Cl.: A45C 11/00

(54) **PROTECTIVE CASE FOR PORTABLE ELECTRONIC DEVICE**

(30) Priority: 03.03.2017 TW 106203117 U
(71) Applicant: Lin, Chia-Hao, Xinbei City (TW)
(72) Inventor: Lin, Chia-Hao, Xinbei City (TW)
(74) Representative: Osterhoff, Utz

(57) **Abstract**

A protective case for a portable electronic device is disclosed that includes: a hard bottom plate including a surface defining at least one hole and a flange provided at a periphery of the bottom plate; a soft framework connected to the bottom plate and defining at least one through hole, wherein at an inner periphery of the framework is defined an engaging groove fitted with the flange, so that the framework and the bottom plate together form an accommodating space for accommodating the portable electronic device, while the side of the bottom plate opposite to the accommodating space forms a receiving groove together with the framework; a glass substrate that corresponds to the shape of the receiving groove; and a plastic film interposed between the bottom plate and the glass substrate, so that the bottom plate and the glass substrate are adhesively disposed within the receiving groove. Thereby, the glass substrate can increase the scratch resistance of the back surface of the protective case, and colors, pictures, or text can also be added to the enhance the texture of the protective case.

## Description

### TECHNICAL FIELD

This disclosure relates generally to protective cases for 3C (computer, communications, and consumer electronics) products, and more particularly relates to an improved scratch-proof and aesthetically pleasing protective case for a portable electronic device such as a mobile phone, a table computer, or a personal digital assistant (PDA).

### BACKGROUND

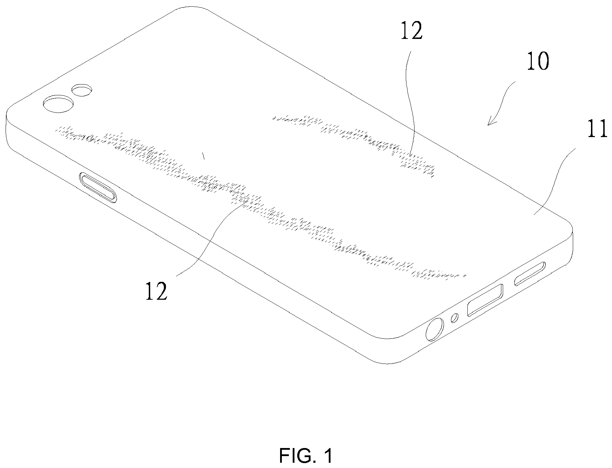

Portable electronic devices such as cell phones, tablet computers, or personal digital assistants (PDAs) have become increasingly popular and almost inseparable from people's lives. Thus, people are paying more attention to the protection of these portable electronic devices. But the aforementioned portable electronic devices, e.g., a mobile phone, can be damaged during use due to some unavoidable causes. For example, the mobile phone may crack from falling or suffer from scratches as a result of wear and tear. To protect the mobile phone from damage, the mobile phone is typically sleeved by a protective case 10 as illustrated in FIG. 1, so that the appearance of the mobile phone can be protected from damage. The protective case is an integrally formed unibody made of a soft flexible material such as thermoplastic polyurethane (TPU), polyurethane (PU), or a material containing silicone. The protective case wraps up the edges and back of the mobile phone body while the touch screen is exposed allowing the user to directly operate the mobile phone without needing to take the protective case off. The protective case is able to absorb vibration thus protecting the mobile phone.

However, since the protective case is made of a soft material, when the mobile phone is placed flat on a table or a relatively hard surface the protective case can easily be scraped resulting in scratches 12 appearing in a large area of the protective case's back 11. Though its functionality is not affected, the overall appearance of the protective case is damaged a great deal and thus not pleasing to the eyes. In addition, dirt and bacteria also can easily be embedded in the scratches 12. Therefore, there is a need to make improvements on such existing protective cases 10.

### SUMMARY

In view of this, to improve the above-mentioned shortcomings, the inventor has been committed to the research and development of protective cases and as a result provides a protective case structure for a portable electronic device, the main technology and purpose of which being bonding a glass substrate to the back of the protective case of a plastic material. Since the glass substrate has high hardness and scratch resistance in its own right, the anti-wear and anti-scratch abilities of the protective case's exterior can be improved. In addition, the surface of the glass substrate is smooth and sparkling, which in turn improves the texture of the protective case and the aesthetics of the appearance.

In accordance with the above object of this disclosure, there is provided a protective case structure for a portable electronic device, the protective case structure including: a bottom plate having a surface that defines at least one hole; a framework that is connected to the bottom plate and that defines at least one through hole, wherein the framework and the bottom plate together form an accommodating space, and the side of the bottom plate opposite to the accommodating space forms a receiving groove together with the framework; a glass substrate corresponding to the shape of the receiving groove; and a plastic film disposed between the bottom plate and the glass substrate, wherein there is disposed a first adhesive layer between the plastic film and the glass substrate and a second adhesive layer between the plastic film and the bottom plate, such that the plastic film and the glass substrate are adhesively disposed within the receiving groove.

In one embodiment according to this disclosure, the bottom plate is made of a hard material, and a flange is provided at a periphery of the bottom plate. The framework is made of a soft material, and an engaging groove is defined at an inner periphery of the framework and fitted with the flange.

In one embodiment according to this disclosure, the bottom plate is made of polycarbonate (PC), or polyethylene terephthalate (PET).

In one embodiment according to this disclosure, the framework is made of thermoplastic polyurethane (TPU), polyurethane (PU), thermoplastic elastomer (TPE), or polypropylene (PP).

In one embodiment according to this disclosure, the glass substrate has a surface that defines at least one first corresponding hole which corresponds to the at least one hole of the bottom plate, while the plastic film has a surface that defines at least one second corresponding hole which corresponds to the at least one hole of the bottom plate.

In one embodiment according to this disclosure, the first adhesive layer is an optical clear adhesive (OCA), while the second adhesive layer is silicone.

In one embodiment according to this disclosure, the glass substrate has a height not exceeding a depth of the receiving groove after being bonded.

In one embodiment according to this disclosure, either the glass substrate or the plastic film is provided with a color.

In one embodiment according to this disclosure, the surface on either side of the plastic film is provided with a pattern, a picture, or text.

In one embodiment according to this disclosure, an adhesive surface of the glass substrate is provided with a pattern, a picture, or text.

With the above structure, the glass substrate can improve the scratch resistance of the back surface of the protective case, and colors and patterns and text can also be added to enhance the texture of the protective case.

### BRIEF DESCRIPTION OF THE ACCOMPANYING DRAWINGS

To better illustrate the technical solutions that are reflected in various embodiments according to this disclosure or that are found in the prior art, the accompanying drawings intended for the description of the embodiments herein or of the prior art will now be briefly described. It is evident that the accompanying drawings listed in the following description show merely some embodiments of this disclosure, and that those having ordinary skill in the art will be able to obtain other drawings based on the arrangements shown in these drawings without making inventive efforts, where in the drawings:
FIG. 1 is a perspective view of a conventional protective case for a portable electronic device;
FIG. 2 is a perspective exploded view of a protective case for a portable electronic device in accordance with an embodiment of this disclosure;
FIG. 3 is a perspective view of a protective case for a portable electronic device in accordance with an embodiment of this disclosure;
FIG. 4 is a cross-sectional view of a protective case for a portable electronic device in accordance with an embodiment of this disclosure;
FIG. 5 is a schematic diagram of a glass substrate provided with pattern in accordance with an embodiment of this disclosure;
FIG. 6 is a schematic diagram of a plastic film provided with pattern in accordance with an embodiment of this disclosure; and
FIG. 7 is a perspective view of a protective case for a portable electronic device that is provided with a pattern in accordance with an embodiment of this disclosure.

### Explanation of Reference Numerals:

### Reference Numerals

- 20: Protective Case
- 21: Bottom Plate
- 22: Hole
- 23: Flange
- 24: Framework
- 241: Rib
- 25: Through Hole
- 26: Engaging Groove
- 27: Accommodating Space
- 28: Receiving Groove
- 30: Glass Substrate
- 31: First Corresponding Hole
- 32: Plastic Film
- 33: Second Corresponding Hole
- 34: First Adhesive Layer
- 35: Second Adhesive Layer

Various implementations, functional features, and advantages of this disclosure will now be described in further detail in connection with some illustrative embodiments and the accompanying drawings.

### DETAILED DESCRIPTION OF ILLUSTRATIVE EMBODIMENTS

Technical solutions reflected in various embodiments according to this disclosure will now be described in a clear and comprehensive manner in connection with the accompanying drawings intended for these embodiments. It is evident that the described embodiments are merely some rather than all of the embodiments of this disclosure. All other embodiments obtained by persons having ordinary skill in the art based on the embodiments of this disclosure without making inventive efforts shall all fall within the scope of protection of this disclosure.

It should be noted that, all directional indicators (such as "up" "down" "left" "right" "front" or "rear") as used in the embodiments herein are merely used to illustrate the relative positions and movements or the like of various components or parts under a specific posture (as depicted in the drawings), and that should the specific posture change, these directional indicators will change accordingly.

As used herein, terms such as "first" or "second" are intended for illustrative purposes only and are not to be construed as indicating or implying their relative importance or implicitly indicating the number of the specified technical features. Thus, a feature modified by terms such as "first" or "second" can explicitly or implicitly include one of such a feature. In addition, technical solutions of various embodiments may be combined with one another; but such combinations must be premised on the achievability to those having ordinary skill in the art. Where a combination of technical solutions ends up contradictory or unachievable, such a combination shall not be regarded as existent nor would it fall within the scope of protection of this disclosure.

In order that the Examiner of this application has a better understanding of this disclosure, a detailed description of this disclosure is set forth below with reference to some illustrative embodiments and the accompanying drawings.

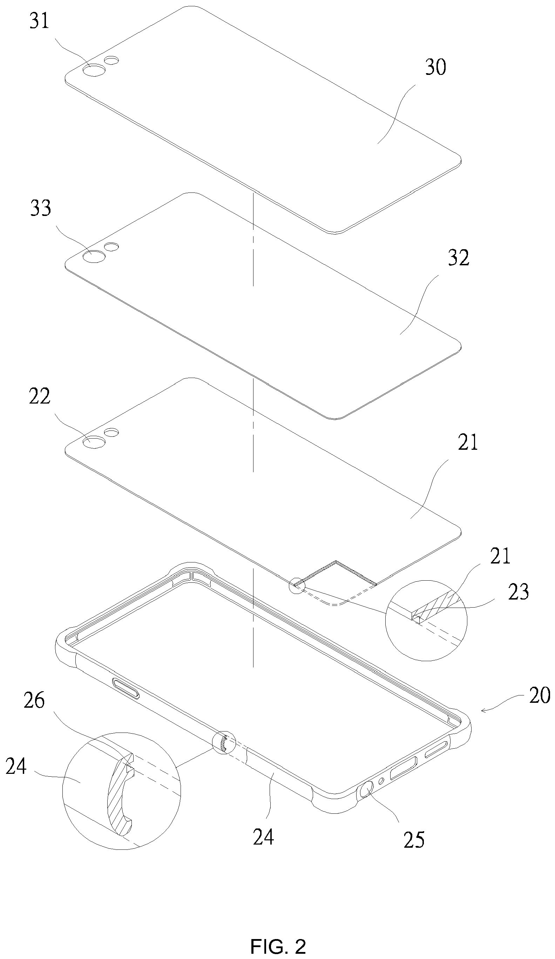

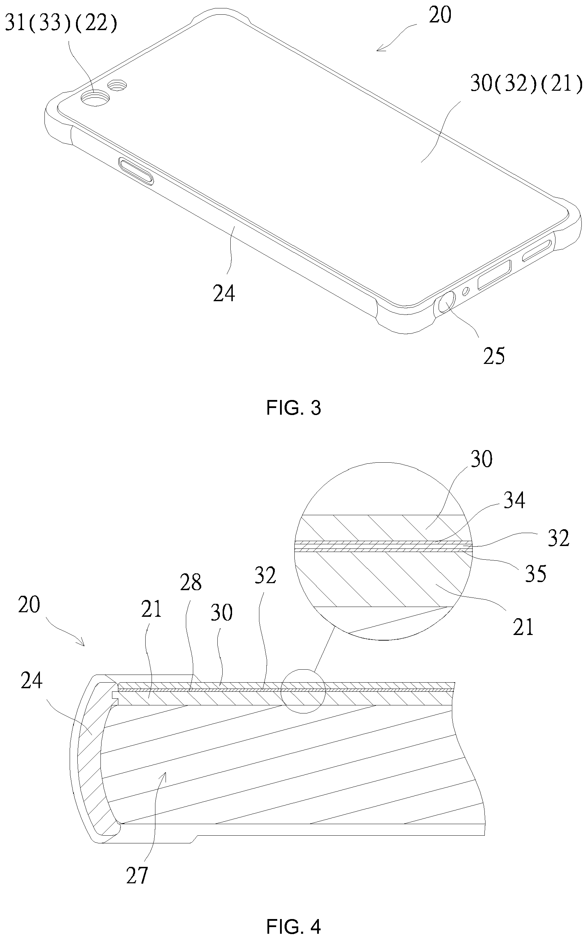

Referring to FIGS. 2 to 4, a protective case structure for a portable electronic device in accordance with this disclosure includes a bottom plate 21, a framework 24, a glass substrate 30, and a plastic film 32. The bottom plate 21 is a hard flat plate used to cover the back surface of the portable electronic device, and has a surface which defines at least one hole 22 corresponding to at least one lens of the portable electronic device; a flange 23 is further provided at a periphery of the bottom plate 21. The framework 24 is a soft frame connected to the bottom plate 21 and used to envelope the periphery of the portable electronic device. The framework 24 defines at least one through hole 25 that corresponds to at least one port of the portable electronic device. At an inner periphery of the framework is defined an engaging groove 26 that is fitted with the flange 23. The framework 24 and the bottom plate 21 together form an accommodating space 27 for accommodating the portable electronic device. The side of the bottom plate opposite to the accommodating space forms a receiving groove 28 with the framework. The glass substrate 30 corresponds to the shape of the receiving groove 28, and at least one first corresponding hole 31 that corresponds to the at least one hole 22 is defined in a surface of the glass substrate 30. The plastic film 32 is interposed between the bottom plate 21 and the glass substrate 30, and at least one second corresponding hole 33 that corresponds to the at least one hole 22 is defined in a surface of the plastic film 32. There is disposed a first adhesive layer 34 between the plastic film 32 and the glass substrate 30, and a second adhesive layer 35 between the plastic film 32 and the bottom plate 21, such that the plastic film 32 and the glass substrate 30 are adhesively disposed within the receiving groove 28. Thereby, the glass substrate 30 can increase the scratch resistance of the back surface of the protective case 20, and colors, pictures, or text can also be added to enhance the texture of the protective case 20.

The constitution as well as various functions and details of the above embodiment is described as follows. As illustrated in FIGS. 2 to 4, the bottom plate 21 of the protective case 20 is made of a relatively hard material that is substantially non-deformable, such as polycarbonate (PC), or polyethylene terephthalate (PET); but this disclosure won't be limited thereto. The framework of the protective case 20 is made of a soft elastic material, e.g., thermoplastic polyurethane (TPU), polyurethane (PU), thermoplastic elastomer (TPE), polypropylene (PP), so as to achieve anti-vibration and firm-locking effects with the protective case 20; but this disclosure won't be limited to the materials listed above. In order that the camera lenses, the trademark graphic, the microphone, or the ports of the portable electronic device can be exposed without being covered by the protective case 20, the hole 22 of the bottom plate 21 can correspond in position to the camera lens, the trademark, or a certain graphic of the electronic device, while the through hole 25 of the framework 24 can correspond in position to a human-machine interface or transmission interface such as a microphone, a port, a power switch, or a volume key of the portable electronic device. The glass substrate 30 may be made of tempered glass, which can effectively enhance the hardness and scratch resistance and prolong the service life of the glass substrate 30. The plastic film 32 is a transparent polymer film (such as PET film or PC film) with high tensile strength which further enhances the strength of the glass substrate 30 and reduces the chance of its fragmentation, and which can prevent the glass substrate from being shattered at the time of breaking of the glass substrate, so that even if it is broken by impact the glass substrate would merely be cracked rather than be shattered and scattered, thereby fulfilling the purpose of enhancing safety and protection. In terms of the formation of the protection case for a portable electronic device in accordance with this disclosure, the flange 23 of the bottom plate 21 is first fitted with the engaging groove 26 of the framework 24, typically with the bottom plate 21 being placed in a mold and the framework 24 being integrally formed by plastic injection molding to wrap on the flange 23 of the bottom plate 21 thus forming the accommodating space 27 and the receiving groove 28. Furthermore, one side surface of the plastic film 32 is coated with the first adhesive layer 34 and bonded to the glass substrate 30 by the first adhesive layer 34; the first adhesive layer 34 typically is a sticky optical clear adhesive (OCA) with excellent optical transmittance, so that the plastic film 32 and the glass substrate 30 can be firmly bonded to each other without separation, with also a satisfactory light transmittance. Next, the other side surface of the plastic film 32 is coated with the second adhesive layer 35 to be bonded to the bottom plate 21 at the receiving groove 28; the second adhesive layer 35 is a made of silicone which is releasable, so that the glass substrate 30 and the plastic film 32 can be repeatedly bonded to or separated from the bottom plate 21 at the same time. Since the bottom plate 21 is made of a hard material and is not easily deformable and has favorable flatness, the bottom plate 21 can be closely bonded to the glass substrate 30 and the plastic film 32, ensuring they be not separated. It should be noted that the surface of the glass substrate 30 doesn't go beyond the receiving groove 28; in other words, the height of the glass substrate 30 after being bonded doesn't exceed the depth of the receiving groove 28, so that the edge of the glass substrate 30 can be prevented from being impacted directly and so can be protected by the protective case 20.

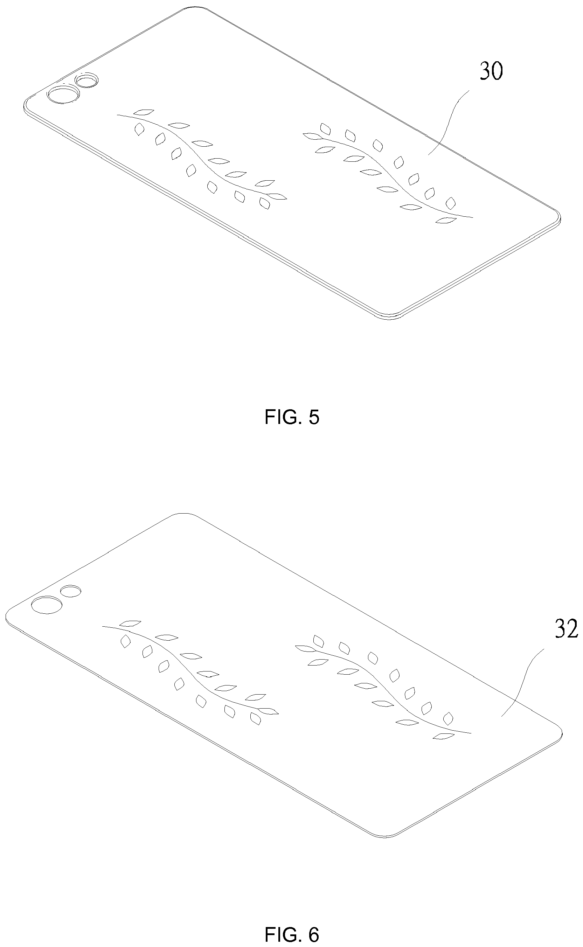

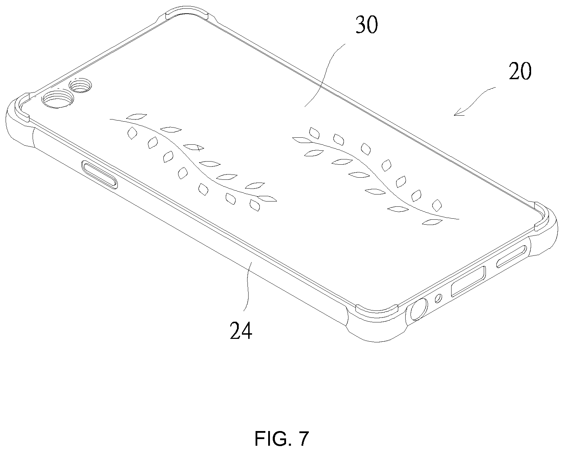

It should also be noted that, as illustrated in FIGS. 5 to 7, any one of the glass substrate 30 or the plastic film 32 may be provided with a color change. Of course, the glass substrate 30 may also be provided on its adhesive side with a pattern, a picture, text or the like as illustrated in FIG. 5, or either side surface of the plastic film 32 can be provided with a pattern, a picture or text as illustrated in FIG. 6. In this way, the protective case 20 can be more aesthetically pleasing and its texture can be improved. Moreover, the user can change the glass substrate 30 or the plastic film 32 with different patterns, pictures or text at any time according to his personal preference, because of the releasability of the second adhesive layer 35 which makes the second adhesive layer 35 be able to be repeatedly pasted and replaced, thereby achieving a better practical effect.

The foregoing embodiments are merely some illustrative embodiments meant for fully explaining the present disclosure and are not intended to limit the features of the present disclosure. Any attempts of recreation taking advantage of the technical means related to this disclosure will still fall within the category of equivalent structures to the present disclosure.

The foregoing merely portrays some illustrative embodiments according to this disclosure and therefore is not intended to limit the scope of protection of the disclosure. Under the inventive concept of this disclosure, any equivalent structural changes based on the specification and accompanying drawings of the disclosure and any direct/indirect applications of the disclosure on other related technical fields shall all be compassed within the scope of protection of this disclosure.

## Claims

1. A protective case for a portable electronic device, comprising:
a bottom plate, having a surface that defines at least one hole;
a framework, connected to the bottom plate and defining at least one through hole, wherein the framework and the bottom plate together form an accommodating space, and a side of the bottom plate opposite to the accommodating space forms a receiving groove together with the framework;
a glass substrate, corresponding to a shape of the receiving groove; and
a plastic film, disposed between the bottom plate and the glass substrate, wherein there is disposed a first adhesive layer between the plastic film and the glass substrate and a second adhesive layer between the plastic film and the bottom plate, such that the plastic film and the glass substrate are adhesively disposed within the receiving groove.

2. The protective case as claimed in claim 1, wherein the bottom plate is made of a hard material, and a flange is arranged at a periphery of the bottom plate; the framework is made of a soft material, and an engaging groove is defined at an inner periphery of the framework and fitted with the flange.

3. The protective case as claimed in claim 1, wherein the bottom plate is made of polycarbonate (PC), or polyethylene terephthalate (PET).

4. The protective case as claimed in claim 1, wherein the framework is made of thermoplastic polyurethane (TPU), polyurethane (PU), thermoplastic elastomer (TPE), or polypropylene (PP).

5. The protective case as claimed in claim 1, wherein the glass substrate has a surface that defines at least one corresponding hole which corresponds to the at least one hole of the bottom plate, and the plastic film has a surface that defines at least one second corresponding hole which corresponds to the at least one hole of the bottom plate.

6. The protective case as claimed in claim 1 or claim 2, wherein the first adhesive layer is an optical clear adhesive (OCA), and the second adhesive layer is silicone.

7. The protective case as claimed in claim 1 or claim 2, wherein the glass substrate after being bonded has a height that doesn't exceed a depth of the receiving groove.

8. The protective case as claimed in claim 1 or claim 2, wherein any one of the glass substrate or the plastic film is provided with a color.

9. The protective case as claimed in claim 1 or claim 2, wherein a surface at either side of the plastic film is provided with a pattern, a picture, or text.

10. The protective case as claimed in claim 1 or claim 2, wherein an adhesive surface of the glass substrate is provided with a pattern, a picture, or text.
